# EUROPEAN PATENT SPECIFICATION

(11) **EP 4 662 635 B1**
(45) Date of publication and mention of the grant of the patent: **18.11.2026**
(21) Application number: 24711156.0
(22) Date of filing: 08.03.2024
(51) Int. Cl.: G06T 13/80

(54) **ANIMATING IMAGES USING POINT TRAJECTORIES**
ANIMATION VON BILDERN UNTER VERWENDUNG VON PUNKTTRAJEKTORIEN
ANIMATION D'IMAGES À L'AIDE DE TRAJECTOIRES DE POINTS

(30) Priority: 08.03.2023 US 202363450951 P; 15.03.2023 US 202363452405 P; 01.02.2024 US 202463548824 P
(43) Date of publication of application: 17.12.2025
(73) Proprietor: GDM Holding LLC, Mountain View CA 94043 (US)
(72) Inventor: DOERSCH, Carl, London N1C 4AG (GB); YANG, Yi, London N1C 4AG (GB); VECERIK, Mel, London N1C 4AG (GB); GOKAY, Dilara, London N1C 4AG (GB); GUPTA, Ankush, London N1C 4AG (GB); AYTAR, Yusuf, London N1C 4AG (GB); CARREIRA, Joao, London N1C 4AG (GB); ZISSERMAN, Andrew, London N1C 4AG (GB)
(74) Representative: Marks & Clerk GST
(86) International application number: PCT/EP2024/056192
(87) International publication number: WO 2024/184516

(56) References cited:
- WALKER JACOB ET AL: "An Uncertain Future: Forecasting from Static Images Using Variational Autoencoders", 16 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 835 - 851, ISBN: 978-3-540-74549-5, XP047355169
- YIJUN LI ET AL: "Flow-Grounded Spatial-Temporal Video Prediction from Still Images", ARXIV.ORG, CORNELL UNIVERSITY LIBRARY, 201 OLIN LIBRARY CORNELL UNIVERSITY ITHACA, NY 14853, 25 July 2018 (2018-07-25), XP081262193
- XUAN QIN: "Single-Image Animation by Cumulative Training and Motion Residual Prediction", May 2021 (2021-05-01), pages 1 - 56, XP093168244, ISBN: 979-8-5160-7973-3, Retrieved from the Internet <URL:https://www.proquest.com/docview/2553333323/fulltextPDF/FE769C4D36B84442PQ/1> [retrieved on 20240528]
- TAO HU: "Generating video animation from single still image in social media based on intelligent computing", JOURNAL OF VISUAL COMMUNICATION AND IMAGE REPRESENTATION, vol. 71, August 2020 (2020-08-01), US, pages 1 - 14, XP093166154, ISSN: 1047-3203, DOI: 10.1016/j.jvcir.2020.102812

## Description

### BACKGROUND

This specification relates to processing inputs that include images using neural networks.

Neural networks are machine learning models that employ one or more layers of nonlinear units to predict an output for a received input. Some neural networks include one or more hidden layers in addition to an output layer. The output of each hidden layer is used as input to the next layer in the network, i.e., the next hidden layer or the output layer. Each layer of the network generates an output from a received input in accordance with current value inputs of a respective set of parameters.

Walker et al., "An Uncertain Future: Forecasting from Static Images Using Variational Autoencoders", ECCV 2016, Part VII, LNCS 9911, pp. 835-851, 2016, describes training a conditional variational autoencoder to predict dense trajectories of pixels in a scene from a static input image

### SUMMARY

Aspects of the present disclosure are defined in the appended independent claims. Further aspects and preferred features are set out in the dependent claims.

This specification describes a system implemented as computer programs on one or more computers in one or more locations that animates images using a generative neural network system.

"Animating" an input image refers to generating a video that represents an animation of the input image, e.g., a video depicts how the scene depicted in the input image changes across time. Examples of change across time include the motion of objects in the scene as well as changes in lighting and other image properties.

This specification also describes techniques for training a point tracking neural network.

A point tracking neural network is a neural network that processes an input video to generate a network output that includes, for each query point in a set of one or more query points in a given frame of the input video, a respective predicted spatial position of the query point in the other video frames in the sequence.

After training the point tracking neural network, the point tracking neural network can be used for any of a variety of purposes.

As one example, the point tracking neural network can be used to generate training data to train the generative neural networks in the generative neural network system that animates images.

Other example uses for the point tracking neural network will be described below.

The subject matter described in this specification can be implemented in particular embodiments so as to realize one or more of the following advantages.

Animating still images is generally a difficult problem, both because video modeling generally has an extremely high computational cost and because predicting realistic motion from a single, still image is difficult.

To address these issues, the described system decomposes the challenging task of animating still images into two parts: (i) first generating a set of point trajectories from an input image and (ii) then generating the video from the point trajectories and the input image. That is, the system first generates a set of point trajectories that are a dense, explicit representation of surface motion of objects in the scene depicted in the input image, and then generate the pixels of the frames in the video from the point trajectories and the input image.

Thus, the described system can use the point trajectories to attend to the appropriate location in the input image when generating the pixels of the frames in order to produce appearance which is consistent across the video. In particular, the point trajectories dictate the motion that should be present in the video, ensuring physical plausibility of the video because the video is generated conditioned on the already-generated point trajectories.

Additionally, by first generating the point trajectories, the system decomposes the video generation problem into two computationally efficient steps and also ensures that the videos generated by the system show realistic motion of the objects depicted in the input image.

Moreover, animating a still image without additional information is an ill-posed problem, because there can be many possible realistic possible future trajectories for any given object depicted in the still image. By making use of a diffusion neural network to generate point trajectories from the still image, the system can effectively sample from the space of realistic surface motion trajectories in order to ensure that the final generated video represents a realistic sample from the highly multi-modal distribution of object motion. Moreover, because the system uses a diffusion neural network to generate the point trajectories, the system can effectively sample multiple plausible sets of point trajectories given the same input image, allowing the system to generate multiple different plausible videos from the same input image that each represent a different sample from the distribution of object motion.

This specification also describes techniques for training a point tracking neural network that effectively leverages unlabeled data to improve the training of the neural network through unsupervised learning. As a particular example, the system can use the described unsupervised learning techniques to fine-tune a pre-trained point tracking neural network that has been trained through supervised learning. That is, the system can use the described unsupervised learning technique to leverage unlabeled data to improve on the performance of the pre-trained neural network. For example, the neural network can have been trained on a data set that includes synthetic video sequences, e.g., that includes only or mostly synthetic video sequences, and the system can then further train ("fine-tune") the neural network through unsupervised learning on fine-tuning data that includes unlabeled real-world video sequences. This can improve the ability of the point tracking neural network to generalize to diverse real-world videos, i.e., to perform point tracking tasks that require processing real-world video sequences, even with no or limited labeled real-world data is available. In particular, while ground truth pixel-level trajectories can be readily generated when generating a synthetic video, obtaining accurate pixel-level trajectory labels for real-world videos can be difficult or impossible. The described techniques allow the system to incorporate unlabeled real-world videos in order to improve the performance of the trained point tracking neural network.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1A shows an example of generating a video that animates an input image.
FIG. 1B is a diagram of an example image animation system.
FIG. 2 is a flow diagram of an example process for generating a set of point trajectories from an input image.
FIG. 3 is a flow diagram of an example process for generating a video from an input image and a set of point trajectories.
FIG. 4 shows example architectures of the point tracking neural network.
FIG. 5 shows an example of training the point tracking neural network.

Like reference numbers and designations in the various drawings indicate like elements.

### DETAILED DESCRIPTION

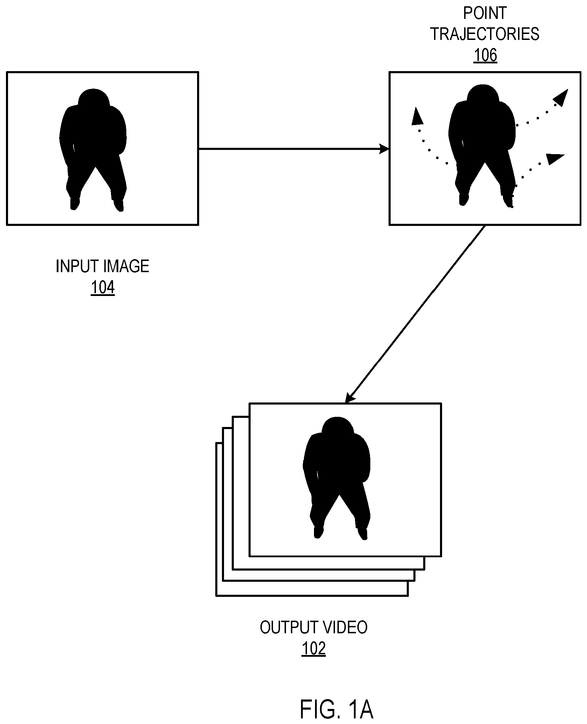

FIG. 1A shows an example of generating a video 102 that animates an input image 104.

As shown in the example of FIG. 1A, an image animation system implemented as computer programs on one or more computers in one or more locations receives the input image 104.

For example, the system can receive the input image 104 from a user of the system.

The system then "animates" the input image 104 by generating a video 102 that represents an animation of the input image 104 that depicts how the scene depicted in the input image 104 changes across time.

That is, even though the input image 104 is a "still" image at a single time point, the system generates a video 102 that includes a respective video frame at each of multiple time steps (starting with the input image 104 as the first frame at the first time step in the video) and represents a realistic estimate of how the scene depicted in the input image 104 would change across time.

In particular, the system decomposes the task of animating the video into two steps.

First, the system processes the input image 104 to generate a set of point trajectories 106.

Each point trajectory 106 corresponds to a different point in the input image 104 and includes, for each of the time steps in the video, a predicted spatial position of the corresponding point in a video frame at the time step in the video (to be generated by the system).

Each point is a point in a corresponding one of the video frames, i.e., that specifies a respective spatial position, i.e., a respective pixel, in a corresponding one of the plurality of video frames. Thus, each point in a given trajectory 106 can be represented as a point (*x, y, t*), where *x, y* are the spatial coordinates of the point and *t* is the index of the corresponding video frame in the video 102.

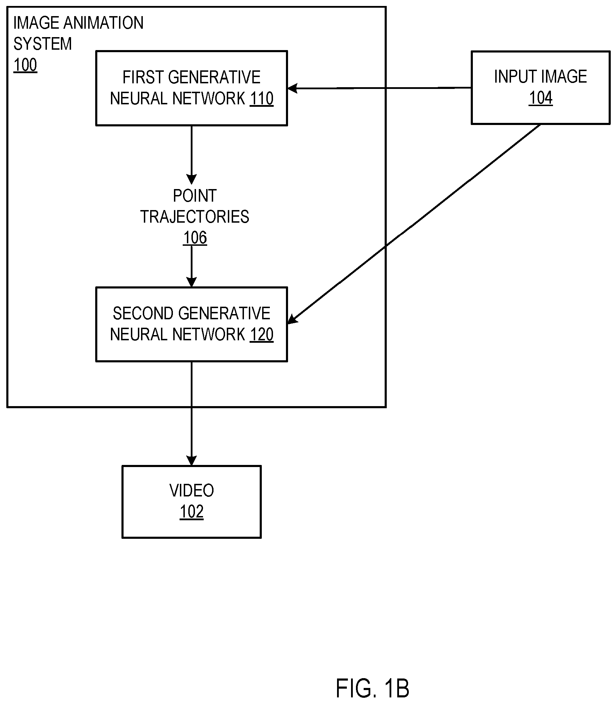

The point trajectories are represented as dotted curves in FIG. 1A, with points at future time points represented as dots on the curve, and points that are closer to the tip of the curve being further in time from the input image. While only three point trajectories are shown in FIG. 1 for ease of illustration, in practice the system can generate many more point trajectories so that the trajectories represent a dense representation of future motion of the points in the input image 104. For example, the system can generate a respective point trajectory for each grid cell in a grid, e.g., an 8 pixel by 8 pixel grid overlaid over the input image.

The point trajectory 106 also includes a respective occlusion score for each of the frames that represents the likelihood that the corresponding point is occluded in the video frame at the time step.

For example, the system can generate the point trajectories 106 from the input image 104 using a generative neural network.

This will be described in more detail below.

The system then processes the input image 104 and the point trajectories 106 to generate the video 102, i.e., generates the frames in the video 102 from the input image 104 and the point trajectories 106.

For example, the system can generate the video 102 from the input image 104 and the point trajectories 106 using another generative neural network.

While not shown in FIG. 1A, because, in the example of FIG. 1A, the point trajectories 106 indicated that points on the depicted person's right arm are likely to move away from the person's body, the video 102 may show the person raising the person's right arm in future frames. Similarly, because the point trajectories 106 indicated that points on the depicted person's left leg are likely to move up and away from the person's body, the video may show the person kicking the person's left leg in future frames.

Thus, the system decomposes the challenging task of animating still images by first generating a dense, explicit representation of surface motion of objects in the scene depicted in the input 104, i.e., by virtue of the point trajectories 106, and then generating the pixels of the frames in the video from the point trajectories 106 and the input image 104.

Thus, the system can use the trajectories 106 to attend to the appropriate location in the input image 104 when generating the pixels of the frames in order to produce appearance which is consistent across the video. In particular, the point trajectories 106 dictate the motion that should be present in the video 102, ensuring physical plausibility.

FIG. 1B is a diagram of an example image animation system 100. The image animation system 100 is an example of a system implemented as computer programs on one or more computers in one or more locations, in which the systems, components, and techniques described below can be implemented.

As described above, the system 100 generates a video 102 that animates an input image 104, i.e., that generates a video 102 that represents an animation of the input image 104 that depicts how the scene depicted in the input image 104 changes across time.

In particular, the system 100 receives an input image 104. For example, the system can receive the input image 104 as input from a user.

The system 100 processes a first input derived from the input image 104 using a first generative neural network 110 to generate respective point trajectories 106 for each of one or more points in the input image 104. The first generative neural network 110 will also be referred to in this specification as the "trajectory model."

For example, the points can be randomly sampled pixels from the input image 104, can be pixels on a grid overlaid over the input image 104, or can be points specified by the user that provided the input image 104 (or another user).

Each point trajectory 106 includes, for each of the plurality of time steps in the video 102, a predicted spatial position of the corresponding point in a video frame at the time step in the video 102 (to be generated by the system 100).

The point trajectory 106 also includes a respective occlusion score for each of the frames. The occlusion score for a given frame estimates the likelihood that the corresponding point will be occluded in the video frame at the time step.

For example, the first generative neural network 110 can be a diffusion neural network that generates each point trajectory from a corresponding noisy trajectory conditioned on the first input. This diffusion neural network will be referred to as a "trajectory" diffusion neural network. As used herein, "noisy" refers to values that have been sampled from a "noise distribution", e.g., a Gaussian distribution or other appropriate distribution. For a given point trajectory, the noisy trajectory therefore includes, for each spatial position in the given point trajectory, a corresponding spatial position that is sampled from a corresponding noise distribution.

The trajectory diffusion neural network can generally have any appropriate neural network architecture that allows the trajectory diffusion neural network to map an input that includes a noisy trajectory to a denoising output that defines an update to the noisy trajectory.

As one example, the trajectory diffusion neural network can be a two-dimensional convolutional neural network, e.g., one that has a U-Net or other convolutional architecture. Optionally, the trajectory diffusion neural network can include, as part of the convolutional architecture, one or more self-attention layers.

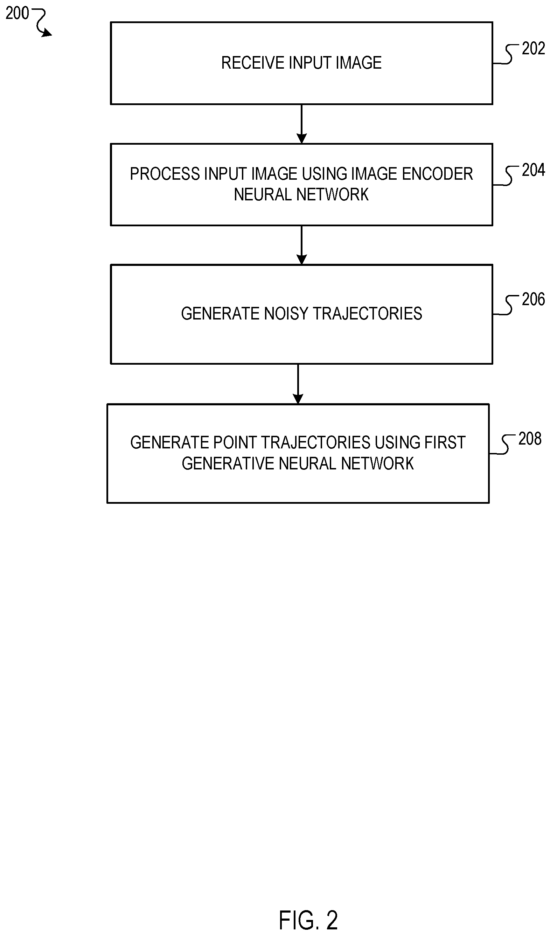

Generating the set of trajectories using the trajectory diffusion neural network will be described in more detail below with reference to FIG. 2.

The system 100 then generates each of the video frames in the video 102 using a second generative neural network 120 and based on the input image 104 and the one or more point trajectories 106. The second generative neural network 120 will also be referred to in this specification as the "pixel model."

For example, the second generative neural network 120 can be a diffusion neural network that generates each video frame (i.e., generate one or more intensity values for each of the pixels of the video frame) in the video from a corresponding noisy video frame conditioned on the input image 104 and the trajectories 106. This diffusion neural network will be referred to as a "pixel" diffusion neural network.

The pixel diffusion neural network can generally have any appropriate neural network architecture that allows the pixel diffusion neural network to map an input to an output image.

As one example, the pixel diffusion neural network can be a convolutional neural network, e.g., one that has a U-Net or other convolutional architecture. Optionally, the pixel diffusion neural network can include, as part of the convolutional architecture, one or more self-attention layers.

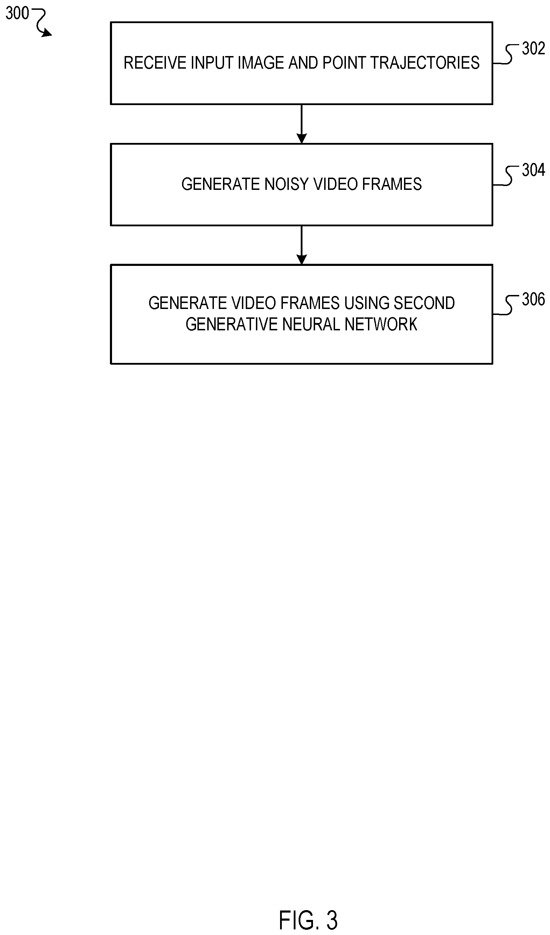

Generating the video 102 will be described in more detail below with reference to FIG. 3.

Thus, the system 100 uses two different generative neural networks, one that generates the point trajectories 106 and one that generates the video 102 given the point trajectories 106. Thus, the outputs from the trajectory model dictate the motion that should be present in the video 102 generated by the pixel model, ensuring physical plausibility of the generated video 102.

Once the video 102 is generated, the system 100 can use the video for any of a variety of purposes. For example, the system 100 can store the video 102 or provide the video 102 for presentation to a user, e.g., to the user that submitted the input image 104.

Prior to using the first and second generative neural networks 110 and 120 to generate videos, the system 100 or another training system trains the neural networks 110 and 120.

For example, the training system can train the first generative neural network 110 on a training data set that includes (i) a plurality of video sequences, where a video sequence is a sequence of video frames, and (ii) for each of the video sequences, a respective point trajectory for each of one or more points in the first frame within the video sequence.

That is, the training system can generate training data for training the first generative neural network 110 from a set of video sequences. For example, the system can generate training examples that each correspond to one of the video sequences and each include, as a training input image, the first frame within the corresponding video sequence and, as the target output, the respective point trajectories for the points in the first frame.

The training system can then train the first generative neural network 110 on the training examples using an objective that is appropriate for the type of neural network that is being used. For example, when the first generative neural network 110 is a diffusion neural network, the objective can be a score matching objective.

As another example, the training system can train the second generative neural network 110 on same training data set.

That is, the training system can generate training data for training the second generative neural network 110 from the set of video sequences. For example, the system can generate training examples that each correspond to one of the video sequences and each include, as a training input image, the first frame within the corresponding video sequence, as a target set of point trajectories, the respective point trajectories for the points in the first frame within the corresponding video sequence, and, as the target output, the corresponding video sequence.

The training system can then train the second generative neural network 110 on the training examples using an objective that is appropriate for the type of neural network that is being used. For example, when the second generative neural network 110 is a diffusion neural network, the objective can be a score matching objective.

In some cases, the training system can generate the point trajectories for at least some of the video sequences by processing the video sequence using a point tracking neural network.

A point tracking neural network is a neural network that processes an input video to generate a network output that includes, for each query point in a set of one or more or more query points in a given frame of the input video, a respective predicted spatial position of the query point in the other video frames in the sequence and, optionally, an occlusion estimate for the query point.

That is, because large numbers of densely labeled videos may not be available for use in training the generative neural networks, the training system can use the point tracking neural network to predict the point trajectories for at least some of the video sequences, and then use the predictions of the point tracking neural network to train the first and second generative neural networks 110 and 120.

The point tracking neural network can generally have any appropriate architecture and can be trained using any appropriate technique.

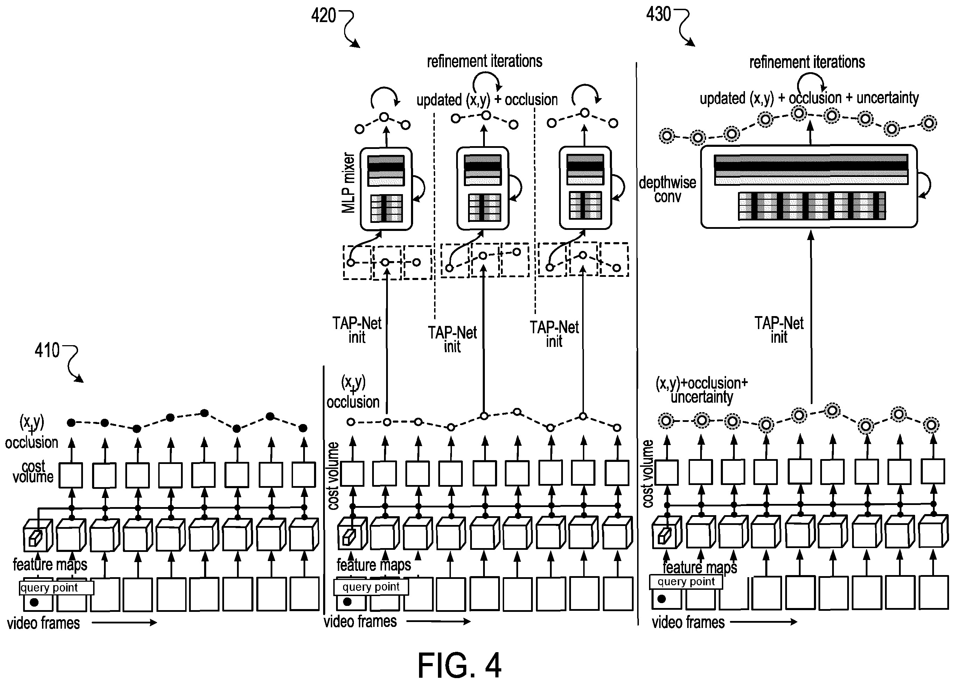

Some examples of architectures for the point tracking neural network are described below with reference to FIG. 4.

Another example of an architecture for the point tracking neural network is described in Doersch, et al, TAP-Vid: A Benchmark for Tracking Any Point in a Video, arXiv:2211.03726.

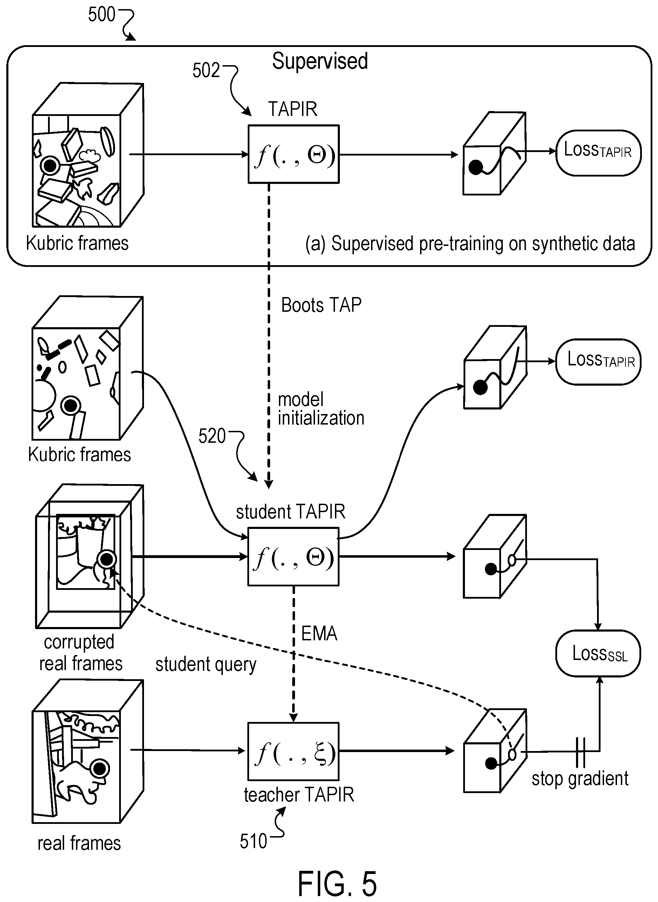

One example of training the point tracking neural network is described below with reference to FIG. 5.

Other examples of training the point tracking neural network are described in Doersch, et al, TAP-Vid: A Benchmark for Tracking Any Point in a Video, arXiv:2211.03726 and Doersch, et al, TAPIR: Tracking Any Point with per-frame Initialization and temporal Refinement, arXiv:2306.08637.

FIG. 2 is a flow diagram of an example process 200 for generating a set of point trajectories. For convenience, the process 200 will be described as being performed by a system of one or more computers located in one or more locations. For example, an image animation system, e.g., the image animation system 100 depicted in FIG. 1B, appropriately programmed in accordance with this specification, can perform the process 200.

The system receives an input image (step 202).

The system processes the input image using an image encoder neural network to generate an encoded representation of the input image (step 204).

Generally, the encoded representation includes a respective feature vector for each of multiple spatial regions in the input image. For example, when the input image is an H x W image, the encoded representation can be an H/k x W/k map of feature vectors. For example, k can be equal to 4, 8, or 16.

The image encoder neural network can generally have any appropriate neural network architecture for encoding input images. For example, the image encoder neural network can be a convolutional neural network or a vision Transformer neural network.

In some cases, the system uses a pre-trained image encoder neural network that has already been trained to generate representations of images on a representation learning task. In some other cases, the system trains the image encoder neural network jointly with the first generative neural network.

The system generates, for each point trajectory in the set, a corresponding noisy trajectory (step 206).

In particular, for a given point trajectory, the noisy trajectory includes a corresponding value for each value in the given point trajectory. To generate the noisy trajectory, the system samples each of these values from a corresponding "noise distribution," e.g., a Gaussian distribution or other appropriate distribution.

Thus, as described above, each point trajectory includes, for each time step in the video, (i) the predicted spatial position of the corresponding point in the video frame at the time step and, (ii) an occlusion score that estimates a likelihood that the corresponding point will be occluded in the video frame at the time step.

The predicted spatial positions in the video frames can be absolute spatial positions, i.e., represented as absolute coordinates in an image coordinate system, or relative spatial positions, i.e., represented as coordinates relative to the corresponding point in the input image.

Accordingly, the system samples the predicted spatial position and the occlusion score for each time step from respective noise distributions, resulting in the trajectory including, for each time step, noisy coordinates, i.e., a noisy predicted spatial position, and a noisy occlusion estimate.

Optionally, the noisy trajectory can also include additional values that assist the first generative neural network in effectively making use of the information contained in the noisy trajectory.

For example, the noisy coordinates can be augmented with a positional encoding. That is, the noisy trajectory can include, for each set of noisy coordinates, a positional encoding of the noisy coordinates. As a particular example, the positional encodings can be Fourier positional encodings that encode the noisy coordinates using a fixed number of Fourier features.

As another example, the noisy trajectory can also include, in addition to the "absolute" noisy coordinates, "relative" noisy coordinates, e.g., coordinates of the noisy predicted spatial position in a coordinate system centered at the corresponding point in the input image.

The system then generates each point trajectory in the set from the corresponding noisy trajectory and the encoded representation of the input image (step 208) using the first generative neural network.

In particular, in the example of FIG. 2, the first generative neural network is a diffusion neural network (trajectory diffusion neural network).

To generate the point trajectories, the system performs a sequence of reverse diffusion iterations using the trajectory diffusion neural network.

At each reverse diffusion iteration, the system processes an input for the reverse diffusion iteration that includes the noisy point trajectories as of the reverse diffusion iteration using the trajectory diffusion neural network and conditioned on the encoded representation of the input image to generate a denoising output that defines an update to the noisy point trajectories.

For example, the denoising output can be a prediction of, for each noisy point trajectory, the corresponding actual (unknown) point trajectory. As another example, the denoising output can be a prediction of, for each noisy point trajectory, the noise that has been added to the corresponding actual point trajectory to generate the noisy point trajectory. As described above, when the input includes both absolute and relative coordinates, in some implementations the denoising output predicts the relative coordinates while, in some other implementations, the denoising output predicts the absolute coordinates.

The system can condition the trajectory diffusion neural network on the encoded representation of the input image in any of a variety of ways.

For example, the system can include the encoded representation as part of the input for the iteration, e.g., concatenated with the noisy point trajectories.

As another example, the trajectory diffusion neural network can include one or more conditioning layers that receive as input the encoded representation of the input image.

As one example, each conditioning layer can be a cross-attention layer that cross-attends into the encoded representation of the input image.

As another example, each conditioning layer can be a conditional group normalization layer. That is, after the group normalization layer does mean subtraction and variance normalization within each group to produce a normalized output Z, a group normalization layer would typically apply a scale and shift operation. To generate a "conditional" group normalization layer these are replaced with linear projections of the conditioning input. For example, the system can resize the encoded representation so that its spatial dimensions are the same size as Z, and then apply respective learned transformations, e.g., two 1 × 1 convolution layers, to create a scale and multiplier that are the same size as Z. These scale and multipliers can then be applied in place of the scale and shift operation.

For each reverse diffusion iteration, the system then uses the denoising output to update the noisy trajectories. For example, the system can generate an estimate of the updated noisy trajectories from the denoising output and then apply a diffusion sampler, e.g., the DDPM (Denoising Diffusion Probabilistic Model) sampler, the DDIM (Denoising Diffusion Implicit Model) sampler or another appropriate sampler, to the denoising output to generate the updated noisy trajectories. When the denoising output is a prediction of, for each noisy point trajectory, the corresponding actual (unknown) point trajectory, the system can directly use the denoising output as the estimate. When the denoising output is a prediction of, for each noisy point trajectory, the noise that has been added to the corresponding actual point trajectory to generate the noisy point trajectory, the system can determine the estimate from the current noisy point trajectories, the denoising output, and a noise level for the current reverse diffusion iteration. Optionally, after the last reverse diffusion iteration, the system can refrain from using the diffusion sampler and can instead use the estimate as the updated noisy trajectories.

The system then uses the updated noisy trajectories after the last reverse diffusion iteration to generate the final point trajectories.

When the point trajectories include occlusion estimates, because the diffusion neural network operates in a continuous space, the system can apply a smoothing operation to make occlusion continuous during the reverse diffusion iterations. The system can then back out a binary occlusion estimate from the noisy occlusion estimate after the last reverse diffusion iteration.

For example, let *õₜ* be an occlusion indicator at time *t.* For example, the occlusion indicator can be equal to 1 if the point is occluded at time *t* and -1 otherwise. For each point *t,* let *t̂* be the nearest time such that *õ_{t̂} ≠ õₜ.* The system can compute ${\overline{o}}_{t} = {{o}^{˜}}_{t} ∗ \left(1-{\left(\frac{2}{3}\right)}^{\left|t-\hat{t}\right|}\right.$ to generate a value that decays exponentially toward the extreme values 1 and -1 as distance from a 'transition' increases but preserves the sign of *õₜ,* making decoding straightforward. The system can use *o̅ₜ* as the occlusion estimate for each time step, rescaled to the range (0, .2). This rescaling encourages the model to reconstruct the motion first, and then reconstruct the occlusion value based on the reconstructed motion. The system can then back out the "transitions" from the estimates *o̅ₜ* in order to reconstruct the occlusion indicators *õₜ* for each of the time steps.

Thus, the system iteratively "denoises" the noisy trajectories to generate the final point trajectories.

As described above, the trajectory diffusion neural network can generally have any appropriate neural network architecture that allows the trajectory diffusion neural network to map an input that includes a noisy trajectory to a denoising output that defines an update to the noisy trajectory.

As one example, the trajectory diffusion neural network can be a two-dimensional convolutional neural network, e.g., one that has a U-Net or other convolutional architecture. Optionally, the trajectory diffusion neural network can include, as part of the convolutional architecture, one or more self-attention layers.

FIG. 3 is a flow diagram of an example process 300 for generating a video from an input image and a set of point trajectories. For convenience, the process 300 will be described as being performed by a system of one or more computers located in one or more locations. For example, an image animation system, e.g., the image animation system 100 depicted in FIG. 1B, appropriately programmed in accordance with this specification, can perform the process 200.

The system receives an input image and a set of point trajectories (step 302).

The system generates, for each video frame in the video, a corresponding noisy video frame (step 304).

In particular, for a given video frame, the noisy video frame includes a corresponding intensity value for each intensity value in the given video frame. To generate the noisy video frame, the system samples each of these values from a corresponding "noise distribution," e.g., a Gaussian distribution or other appropriate distribution.

The system then generates each video frame from the corresponding noisy video frame, the input image, and the point trajectories (step 306) using the second generative neural network.

In particular, in the example of FIG. 3, the second generative neural network is a diffusion neural network (pixel diffusion neural network).

To generate the video frames, the system performs a sequence of reverse diffusion iterations using the pixel diffusion neural network. That is, at each reverse diffusion iteration, the system updates the corresponding noisy video frame for each of the video frames at each of the time steps.

At each reverse diffusion iteration and for each video frame, the system processes an input for the reverse diffusion iteration that includes the corresponding noisy video frame as of the reverse diffusion iteration using the pixel diffusion neural network and conditioned on the input image and the point trajectories to generate a denoising output that defines an update to the noisy video frame.

For example, the denoising output can be a prediction of the corresponding actual (unknown) video frame.

As another example, the denoising output can be a prediction of the noise that has been added to the corresponding actual video frame to generate the noisy video frame.

The system can condition the pixel diffusion neural network on the input image and the point trajectories in any of a variety of ways.

As one example, the system can include, in the input to the diffusion neural network for a given video frame at a given time point, a version of the input image that has been warped according to the one or more point trajectories to represent the image. That is, the system can generate a warped version of the input image that has been warped according to the one or more point trajectories, i.e., is a representation of how the input image appears at the time point if the points move according to the point trajectories.

The system can generate the warped version of the input image in any of a variety of ways.

As one example, the system can use a patch-based warping. For a given frame t, the trajectories at time *t* identify where each patch in the input image should appear. Therefore, the system can construct a new image where each local patch is placed at its correct location, using bilinear interpolation (for example) to get subpixel accuracy. However, this may yield gaps between patches in certain circumstances. In some implementations, to account for this, the system can actually warp a larger patch around each point. When multiple patches appear covering the same output pixel, the system can weight them inversely proportional to their distance from the track center.

Optionally, to address the fact that aliasing can occur when multiple patches overlap, the system can perform the warping by warping each patch multiple times, with the difference between the warps being the way that the system computes the blending weights. The system can then include all of the warped versions of the input image in the input to the diffusion neural network. For example, let *p_{i,j,t}* be the position of the trajectory beginning at point *i,j* in the original image at time *t* according to the point trajectory for the point *i,j.* In the original warping, the weight for the patch carried by trajectory to any particular pixel *p'ₜ* (assuming *p'ₜ* is close enough to be within the patch) is proportional to 1/*d*(*p_{i,j,t}, p'ₜ*), where *d* is Euclidean distance. The system can instead use different weightings for different warps. For example, the weighting can be 1/*d*(*p_{i,j,t}* + η, *p'ₜ*) where η is different for different warps. For example, when there are five warps, the system can have η ∈ {(0, 0), (-2, 0), (0,-2), (2, 0), 0, 2)}. This allows the model to use the differences in intensities between the different warpings to infer the original values for different patches, and then use this information to 'undo' any aliasing.

The system can then include this warped version of the input image with the noisy version of the video frame, e.g., by concatenating the two images.

As another example, the system can condition the diffusion neural network on a warped version of features extracted from the input image, i.e., on features of the input image that have been warped according to the one or more point trajectories to represent the image.

For example, the features can be the feature vectors in an encoded representation of the input image. For example, the encoded representation can be the same encoded representation described above with reference to step or can be a different encoded representation generated by a different, separately trained image encoder neural network.

To warp these features for a time step *t*, the system can use the position of each feature at time step *t* according to the set of point trajectories. The system can then use bilinear interpolation (for example) to place the feature at the appropriate location within a grid of the "warped" features. Optionally, the system can keep track of the number of features that have been placed within any particular grid cell (specifically, the sum of bilinear interpolation weights) and normalize by this sum, unless the sum is less than 0.5, in which case the system can divide by 0.5.

The system can condition the diffusion neural network on the warped version of features in any appropriate way, e.g., using one of the conditioning techniques described above with reference to FIG. 2.

In some implementations, for at least a subset of the frames, the system also includes in the input to the diffusion neural network for the frame, temporal context from other frames in the video. For example, for a given frame, the input at a given reverse diffusion iteration can include the current (noisy) version of one or more preceding frames in the video as of the reverse diffusion iteration. Instead or in addition, for a given frame, the input at a given reverse diffusion iteration can include the current (noisy) version of one or more following frames in the video as of the reverse diffusion iteration.

For each reverse diffusion iteration, the system then uses, for each video frame, the denoising output for the video frame to update the corresponding noisy video frame. For example, the system can generate an estimate of the updated noisy video frame from the denoising output and then apply a diffusion sampler, e.g., the DDPM (Denoising Diffusion Probabilistic Model) sampler, the DDIM (Denoising Diffusion Implicit Model) sampler or another appropriate sampler, to the estimate to generate the updated noisy video frame. When the denoising output is a prediction of the corresponding actual (unknown) frame, the system can directly use the denoising output as the estimate. When the denoising output is a prediction of the noise that has been added to the corresponding actual frame to generate the noisy frame, the system can determine the estimate from the current noisy frame, the denoising output, and a noise level for the current reverse diffusion iteration. Optionally, after the last reverse diffusion iteration, the system can refrain from using the diffusion sampler and can instead use the estimate as the updated noisy frame.

The system then uses the updated noisy video frames after the last reverse diffusion iteration to generate the video frames in the video.

FIG. 4 shows example architectures 410, 420, and 430 of a point tracking neural network.

The point tracking neural network is a neural network that processes an input that includes (i) a video that includes a plurality of video frames and (ii) a set of one or more query points.

Each query point is a point in a corresponding one of the video frames, i.e., specifies a respective spatial position, i.e., a respective pixel, in a corresponding one of the plurality of video frames.

The point tracking neural network 400 processes the set of one or more query points and the video sequence, i.e., the intensity values of the pixels of the video frames in the video sequence, to generate a network output that includes, for each query point, a respective predicted spatial position of the query point in the other video frames in the sequence, i.e., in the video frames other than the corresponding video frame for the query point.

Because of the architecture of the neural network or because of the design of the processing pipeline, the network output can also include a predicted spatial position for the corresponding video frame. However, in some of these cases, the system can disregard the predicted spatial position for the corresponding video frame (because the actual position in the corresponding video frame is provided as input to the system).

That is, given a query point in one of the video frames, the point tracking neural network can generate a prediction of the spatial position of the query point in the other video frames in the video.

The predicted position of a given query point in a given other video frame is a prediction of the location of the portion of the scene that was depicted at the given query point in the corresponding video frame. For example, if, at the given query point, the corresponding video frame depicted a particular point on a surface of an object in the scene, the predicted position of the given query point identifies the predicted position of the same particular point on the surface of the object in the given other video frame.

In some implementations, the point tracking neural network also generates, for each query point, a respective occlusion score for the query point for each of the other video frames in the sequence. The occlusion score for a given query point in a given video frame represents the likelihood that query point is occluded in the given video frame, i.e., that the portion of the scene that was depicted at the query point in the corresponding video frame is occluded in the given video frame.

In particular, in the example architecture 410, the point tracking neural network is configured to, for a given video sequence and corresponding point in a given frame in the video sequence, generate a query feature for the corresponding point.

The neural network is then configured to generate, using the query feature, a cost volume that includes a respective cost map for each a plurality of the frames in the video sequence.

For example, the neural network can process a sequence of *w* x *h* video frames and receive a query point (*i_{q}, j_{q}, t_{q}*) in a video frame *t_{q}.*

The neural network processes the video frames in the video sequence using a visual backbone neural network to generate a feature grid that includes a respective visual feature, i.e., a feature vector, for each of a plurality of spatial locations in each of the video frames. Generally, each of the spatial locations corresponds to a different region of the video frame. For example, the feature grid can be an *w*/*8* x *h*/*8* grid of *d* dimensional visual features, with each visual feature corresponding to an 8 x 8 grid of pixels from the corresponding video frame.

The visual backbone neural network can have any appropriate architecture that allows the neural network to map the video sequence to a feature grid. In the example of FIG. 3, the visual backbone neural network is a 3D convolutional neural network (ConvNet), e.g., a TSM-ResNet-18 or other appropriate convolutional neural network. In other examples, the visual backbone neural network can be a different type of neural network, e.g., a vision Transformer neural network.

The neural network can then generate an extracted feature for the query point from the spatial position of the query point in the corresponding video frame and the respective visual features for one or more of the plurality of spatial locations in the corresponding video frame.

For example, the neural network can generate the extracted feature ("query features") by performing an interpolation, e.g., a bilinear interpolation, of the visual features of a set of spatial locations that are within a local neighborhood of the respective spatial position (*i_{q}, j_{q}*) of the query in the corresponding video frame *t_{q}.*

The neural network then generates a cost volume from the feature grid and the extracted feature for the query point. For example, the cost volume can have a respective cost value for each spatial location in each of the video frames. That is, the cost volume includes an h' x w' x 1 grid of cost values for each video frame in the sequence.

To compute the cost value for a given spatial location in a given video frame, the system computes a dot product between the extracted feature and the visual feature for the given spatial location in the given video frame.

The neural network is then configured to generate, for each of the plurality of frames, an initial position of the corresponding point in the frame and an initial occlusion estimate for the corresponding point in the frame using the cost map for the frame.

Generally, to generate the predicted positions, the neural network can process the cost volume using a decoder neural network to generate, for each video frame, a respective score for each spatial location in the video frame.

For each of the plurality of video frames other than the corresponding video frame, the neural network can then generate the initial predicted position from the respective scores for the spatial locations in the video frame.

When the neural network also predicts occlusion, as in the example of FIG. 4, the neural network can process the cost volume using the decoder neural network to generate, for each video frame other than the corresponding video frame, the respective predicted position of the query point in the video frame and the respective occlusion score for the query point in the video frame.

For example, the neural network can perform this processing independently for each of the video frames. That is, for a given video frame, the neural network processes the *h'* x *w'* x *1* portion of the cost volume for the given video frame using the decoder neural network to generate the predicted position of the query point within the given video frame and the occlusion score for the query point in the video frame.

For example, the decoder neural network can include a set of shared layers and respective branches for position inference and occlusion inference.

The decoder neural network processes the portion of the cost volume for the given video frame using the shared layers, e.g., using a convolutional layer followed by a rectified linear unit (ReLU) activation function layer, to generate a shared output.

For the occlusion inference branch, the decoder neural network processes the shared output using the layers in the occlusion inference branch to generate a single occlusion score ("logit") for the given video frame. For example, the occlusion inference branch includes a first set of layers that collapse the shared output into a vector, e.g., using spatial average pooling, followed by a second set of layers that regress the occlusion logit for the given video frame from the single vector. For example, the second set of layers can include a linear layer, a Leaky ReLU, and another linear layer which produces a single logit. A Leaky ReLU may be a ReLU activation function that has a slope (e.g. a relatively small slope, such as a slope of 0.01) for negative values (e.g. opposed to a flat slope for negative values).

For the position inference branch, the neural network can apply a set of layers, e.g., a convolutional (Conv) layer with a single output, followed by a spatial softmax, to generate a respective score for each spatial location in the video frame.

The neural network can then compute a "soft argmax" to compute the position from the respective scores.

To compute the soft argmax, the neural network can identify the spatial location with the highest score, i.e., the "argmax" location, according the respective scores for the spatial locations. The neural network can then identify each spatial location that is within a fixed size window *B* of the spatial location with the highest score, i.e., the argmax location and then determine the predicted position by computing a weighted average.

That is, the neural network determines the predicted position by computing a weighted sum of the spatial locations within the fixed sized window of the argmax spatial location, with the weight for each spatial location being computed based on, e.g., equal to or directly proportional to, the ratio between the score for the spatial location and a sum of the scores for the spatial locations within the fixed size window.

In the example architecture 410, the neural network uses the initial positions and the initial occlusion estimates as the final outputs of the neural network.

In this example, a training system can train the neural network on the following loss function for a given query point for each frame *t* in a given training video:
(1 *- ôₜ*)*L_{H}*(*p̂ₜ, pₜ*) *+ λBCE*(*ôₜ, oₜ*) where *ôₜ* is the ground truth occupancy for video frame *t, p̂* is the ground truth position of the query point in video frame *t, oₜ* is the predicted occupancy for video frame *t, pₜ* is the predicted position of the query point in video frame *t, L_{H}*(*p̂ₜ, pₜ*) is the Huber loss between *p̂ₜ* and *pₜ, λ* is a weight value that can be provided as input to the system or determined through a hyperparameter sweep, and *BCE*(*ôₜ, oₜ*) is the binary cross-entropy loss between *ôₜ* and *oₜ.*

In the example architectures 420 and 430, once the initial estimate is generated, the neural network 400 generates the point trajectory for the corresponding point by refining the initial positions, refining the initial occlusion estimates for the plurality of frames, or both, using an initial point trajectory that includes the initial positions and the initial occlusion estimates for the plurality of frames.

In particular, in the example of FIG. 4, the neural network refines the initial positions and the initial occlusion estimates for the plurality of frames by performing one or more refining iterations.

At each refining iteration, the neural network 400 generates, from a current point trajectory as of the refining iterations, a set of local score maps that, for each frame, capture similarity between features in a neighborhood of the predicted position in the current point trajectory in the frame and the query feature. For the first refinement iteration, the current point trajectory is the initial point trajectory. For any subsequent refinement iterations, the current point trajectory is the updated point trajectory after the preceding refinement iteration.

The neural network then processes an input that includes the set of local score maps using a refinement neural network to generate an update to the current point trajectory. As a particular example, the input to the refinement neural network can include the set of local score maps, the query feature, and the current point trajectory.

For example, in the example architecture 430, the refinement neural network is a depthwise mixing neural network that propagates information across frames using depthwise convolutional layers. Each depthwise convolutional layer may, for example, have a temporal receptive field that extends over a plurality (e.g. all or a subset) of the frames.

In this example, a training system can train the neural network on a loss that is a sum of the above loss computed for the initial predictions and the predictions after every refinement iteration.

In some implementations, the neural network can also generate an uncertainty estimate for each predicted spatial position that represents the uncertainty of the neural network in the prediction. For example, the neural network can output an additional logit within the occlusion pathway and processes the additional logit to generate an uncertainty estimate *uₜ.* When the neural network makes use of refinement, the neural network also refines the uncertainty estimates at each refinement iteration.

In this example, the above loss can include an additional term (1 *- ôₜ*)*BCE*(*ûₜ, uₜ*) where *ûₜ* is a ground truth uncertainty estimate for the prediction that is equal to one if the Euclidean distance between *p̂ₜ* and *pₜ* is greater than a threshold and zero if not.

A description of a specific example of the architecture 430 now follows.

Given an estimated position, occlusion, and uncertainty for each frame, the goal of each iteration *i* of the refinement procedure is to compute an update ( ${Δp}_{t}^{i} , {Δo}_{t}^{i} , {Δu}_{t}^{i}$) which adjusts the estimate to be closer to the ground truth, integrating information across time. The update is based on a set of "local score maps" which capture the query point similarity (i.e. dot products) to the features in the neighborhood of the trajectory.

For example, these can be computed on a pyramid of different resolutions, so for a given trajectory, they have shape (H' ×W' × L), where H' = W' = 7, the size of the local neighborhood, and L is the number of levels of the spatial pyramid. For example, the different pyramid levels can be computed by spatially pooling the feature volume F that includes features for spatial locations within frames of the video. This set of similarities is post-processed with a refinement network to predict the refined position, occlusion, and uncertainty estimate.

Unlike the initialization, however, the neural network includes "local score maps" for multiple frames simultaneously as input to the post-processing. As a particular example, the neural network can include the current position estimate, the raw query features, and the (flattened) local score maps into a tensor of shape T × (C + K + 4), where C is the number of channels in the query feature, K = H' · W' · L is the number of values in the flattened local score map, and 4 extra dimensions for position, occlusion, and uncertainty.

The output of this refinement network at the i'th iteration is a residual ( ${Δp}_{t}^{i} , {Δo}_{t}^{i} , {Δu}_{t}^{i}$) which is added to the position, occlusion, uncertainty estimate, and the query feature, respectively.

*ΔF_{q,t,i}* is of shape T ×C; thus, after the first iteration, slightly different "query features" are used on each frame when computing new local score maps.

These positions and score maps are fed into a convolutional network to compute an update ( ${Δp}_{t}^{i} , {Δo}_{t}^{i} , {Δu}_{t}^{i} , {ΔF}_{q , t , i}$)*.* For example, each block can include a 1×1 convolution block and a depthwise convolution block. For example, the 1x1 convolution blocks can be cross-channel layers and the depwthwise convolutions can be within-channel layers. Because the architecture is convolutional and uses convolutions to incorporate convolutions across time, this convolutional architecture can be run on sequences of any length.

FIG. 5 shows an example 500 of training a point tracking neural network, e.g., a point tracking neural network that has one of the architectures 410, 420, or 430 or that has a different network architecture.

In the example of FIG. 5, the system "fine-tunes" a "pre-trained" point tracking neural network through unsupervised learning.

As a particular example, the system can fine-tune a pre-trained point tracking neural network that has been trained through supervised learning on a data set that includes synthetic video sequences, e.g., that includes only or mostly synthetic video sequences, through unsupervised learning on fine-tuning data that includes unlabeled real-world video sequences. This can improve the ability of the point tracking neural network to generalize to diverse real-world videos, i.e., to perform point tracking tasks that require processing real-world video sequences.

In particular, the system receives data specifying a teacher point tracking neural network 510.

The teacher neural network 510 is configured to receive a teacher point tracking input that includes (i) a video sequence that includes a plurality of video frames and (ii) a query point in one of the plurality of video frames and to generate a teacher point tracking output comprising, for each other video frame of the plurality of video frames, a position of the query point in the other video frame and an occlusion estimate for the query point in the other video frame.

The system then trains a student point tracking neural network 520 through unsupervised learning.

Like the teacher neural network 510, the student point tracking neural network 520 is configured to receive a student point tracking input that includes (i) the video sequence comprising the plurality of video frames and (ii) the query point in one of the plurality of video frames and to generate a student point tracking output that includes, for each other video frame of the plurality of video frames, a position of the query point in the other video frame and an occlusion estimate for the query point in the other video frame.

In particular, prior to the training, the teacher point tracking neural network 510 has been pre-trained. In the example of FIG. 5, the teacher point tracking neural network has been pre-trained through supervised learning, e.g., on a data set of synthetic video sequences. to yield pre-trained network parameters 502.

For example, the system or another training system can have pre-trained the teacher point tracking neural network 510 on one of the above loss functions.

For example, the teacher neural network can have the architecture 410, 420, or 430 or a different point tracking neural network architecture.

Additionally, in the example of FIG, 5, the teacher and student point tracking neural networks 510 and 520 have the same architecture or, more generally, the student point tracking neural network 520 includes all of the same parameters as the teacher neural network 510 and, optionally, additional parameters. For example, the student 520 can include, as part of the backbone, one or more additional convolutional residual layers that are each initialized to represent an identity transformation.

To take advantage of this, prior to training the student point tracking neural network 520, the system initializes parameters of the student point tracking neural network 510 using the teacher point tracking neural network 520, i.e., to be the pre-trained network parameters 502.

The system then trains the student point tracking neural network 520 across multiple training steps.

At each training step, the system receives a set of one or more training video sequences from a training data set that includes a plurality of training video sequences. As shown in the example of FIG. 5, the videos in the training data set can be real-world videos that include real-world video frames.

For each training video sequence, the system applies one or more transformations to the training video sequence to generate a transformed video sequence ("corrupted real frames"). For example, the one or more transformations include spatial transformations, image corruptions, or both.

As a specific example, given an input video, the system can create a second view of the input video by resizing each frame to a smaller resolution (varying linearly over time, e.g., over the course of the training) and superimposing them onto a black background at a random position (also varying linearly across time). This can be computed a frame-wise axis-aligned affine transformation Φ on coordinates, applied to the pixels.

Optionally, the system can further degrade this view by applying a random JPEG degradation to make the task more difficult, before pasting it onto the black background. Both operations lose texture information; therefore, the network must learn higher-level-and possibly semantic-cues (e.g. the tip of the top left ear of the cat), rather than lower-level texture matching in order to track points correctly.

The system then selects one or more teacher query points within the training video sequence. For example, the system can sample each teacher query point by sampling a position and a time step index within the training video sequence, both uniformly at random.

For each teacher query point, the system generates a teacher point tracking output for the teacher query point by processing the video sequence using the teacher point tracking neural network 510.

The system identifies a corresponding student query point in the transformed video sequence, i.e., identifies a student query point in the transformed video sequence that corresponds to the teacher query point.

In particular, the system can identify an initial student query point using the teacher point tracking output and then transform the initial student query point consistent with the one or more transformations to generate the student query point. That is, the system can also apply Φ to the student query coordinates to generate the final student query point coordinates.

For example, to identify an initial student query point, the system can sample a point randomly from the trajectory generated for the teacher query point. This can enforce that each track forms an equivalence class by training the student neural network 520 to produce the same track regardless of which point is used as a query.

The system generates a student point tracking output for the student query point by processing the transformed video sequence using the student point tracking neural network 520.

The system then trains the student point tracking neural network using a loss function that, for each training video sequence and for each teacher query point, measures a difference between (i) the student point tracking output for the corresponding student query point and (ii) the teacher point tracking output for the teacher query point.

For example, the system can, for each training video sequence and for each teacher query point, generate a pseudo-label from the teacher point tracking output. The loss function can then measure an error between the pseudo-label and the student point tracking output.

For example, when training using the above loss, the system can generate a pseudo label for a given video frame by (i) setting the ground truth location in the given video frame to the spatial prediction in the teacher point tracking output, (ii) setting the ground truth occlusion score to 1 only if the teacher occlusion estimate exceeds a threshold value, e.g., zero, and, optionally, (iii) setting the ground truth uncertainty to 1 only if the distance between the student prediction and the teacher prediction for the frame exceeds the threshold distance.

Then, the system can train the student point tracking neural network on the above loss function, but with the pseudo-label in place of the ground truth outputs.

Note, however, that if the teacher has not tracked the point correctly, the student's query might be a different real-world point than the teacher's, leading to an erroneous training signal. In some implementations, to account for this, the system can determine, for each teacher query point, whether to mask out the teacher query point from the loss function by applying cycle-consistency between the student point tracking output and the teacher point tracking output, i.e., and then determining to mask out any teacher query point that is not cycle-consistent. "Masking out" a teacher query point refers to removing or setting to zero all quantities that depend on the teacher query point when computing the loss function.

Additionally, it may be that the teacher's predictions are less accurate than the student's for points that are closer in time to the student's query frame. In some implementations, to account for this, the system can determine, for each teacher query point, whether to mask out predictions for the teacher query point for any training video frames from the loss function by applying a proximity mask. That is, the system can apply the proximity mask to mask out, from the loss function, any training video frames that are closer to the student's query frame than to the teacher's query frame. "Masking out" a training video frame for a teacher query point refers to removing or setting to zero all quantities that depend on the training video frame and the teacher query point when computing the loss function.

Optionally, during the unsupervised training, the system can continue training the point tracking neural network through supervised learning, e.g., to assist in avoiding catastrophic forgetting. In these cases, at some or all of the training steps, the system also trains the student neural network through supervised learning on a set of labeled video sequences.

At some or all of the training steps, the system can update the teacher point tracking neural network 510 using the student point tracking neural network 520. For example, as shown in FIG. 5, the system can, at specified points during the training, update the parameters of the teacher point tracking neural network 510 to be an exponential moving average (EMA) of parameters of the student point tracking neural network 520. That is, rather than freezing the teacher point tracking neural network 510 during the course of the training, the system continues to update the teacher neural network 510 during training to improve the quality of the training process.

The point tracking neural network described with reference to FIGS. 4 or 5 can be used for any of a variety of purposes.

For example, the point tracking neural network can be used to generate training data for the generative neural networks described above.

As another example, the predicted positions generated by the point tracking neural network can be used to generate a reward signal for training a robot or other agent through reinforcement learning, e.g., if the task being performed by the agent requires moving a point in the scene from one location to another, the distance between the predicted position of the point in the last video frame in the sequence and the target location can be used to generate a reward.

As another example, the predicted positions (and optionally the occlusion scores) generated by the point tracking neural network can be provided as an additional input to a policy neural network for controlling a robot or other agent interacting with an environment. In this example, the query points can be points of interest in the last frame of the video sequence, and the predictions for the earlier frames in the sequence can be provided as input to the policy neural network, e.g., to provide a signal as to the recent motion of the agent or of other objects in the environment.

As another example, the predicted positions (and optionally the occlusion scores) generated by the point tracking neural network can be provided, along with the corresponding video sequence, as input to a video understanding neural network, e.g., an action classification neural network or a topic classification neural network, to provide additional information to the video understanding neural network regarding motion in the scene.

As another example, the predicted positions (and optionally the occlusion scores) generated by the point tracking neural network can be used for imitation learning, i.e., to enable the imitation of motion rather than appearance.

As described above, the first generative neural and/or the second generative neural network can be a diffusion neural network. In general, a diffusion neural network is a neural network that, at any given time step, is configured to process a diffusion input that includes (i) a current noisy data item (such as a noisy trajectory, noisy coordinate, noisy occlusion estimate or noisy video frame) and, optionally, (ii) data specifying the given time step to generate a denoising output that defines an estimate of a noise component of the current noisy data item given the current time step. The estimate of the noise component is an estimate of the noise that has been added to an original data item (such as a point trajectory or a video frame) to generate the current noisy data item. The denoising output can be, e.g., the estimate of the noise component or an estimate of the original data item.

After training, the system or another inference system uses the trained diffusion neural network to generate an output data item (such as a point trajectory or a video frame) across multiple time steps by performing a reverse diffusion process to gradually de-noise an initial data item until the final output data item is reached. Some or all of the values in the initial data item are noisy values, i.e., are sampled from an appropriate noise distribution.

That is, the initialized data item is the same dimensionality as the final data item but has noisy values. For example, the system can initialize the data item, i.e., can generate the first instance of the data item, by sampling each value in the data item from a corresponding noise distribution, e.g., a Gaussian distribution, or a different noise distribution. That is, the output data item includes multiple values and the initial data item includes the same number of values, with some or all of the values being sampled from a corresponding noise distribution.

As noted above, the pixel diffusion neural network can generally have any appropriate neural network architecture that allows the pixel diffusion neural network to map an input to an output image.

In some implementations, the architecture of the pixel diffusion neural network may be similar to the U-Net neural network architecture, described by O. Ronneberger et al. in "U-Net: Convolutional Networks for Biomedical Image Segmentation", arXiv:1505.04597. In a particular example, the pixel diffusion neural network may be implemented as convolutional neural networks including a downwards, analysis path and an upwards, synthesis path, where each path includes multiple neural network layers. The analysis path may include multiple down-sampling, for example convolutional, layers and the synthesis path may include multiple up-sampling, for example up-convolutional layers. In addition to convolutional layers, up and/or down sampling may be partially or wholly implemented by interpolation. The neural networks may include shortcut skip or residual connections between layers of equal resolution in the analysis and synthesis paths. In some implementations at least one of a set of one or more layers between the analysis and synthesis paths includes a fully-connected set of layers.

In some implementations, the first or second generative neural network can comprise one or more self-attention layers. In general, a self-attention layer can be one that applies an attention mechanism to elements of an embedding (e.g. input data) to update each element of the embedding e.g. where an input embedding is used to determine a query vector and a set of key-value vector pairs (query-key-value attention), and the updated embedding comprises a weighted sum of the values, weighted by a similarity function of the query to each respective key. There are many different attention mechanisms that may be used. For example the attention mechanism may be a dot product attention mechanism applied by applying a query vector to respective key vector to determine respective weights for each value vector, then combining a plurality of value vectors using the respective weights to determine the attention layer output for each element of the input sequence.

The system and method described herein can be used to predict how a physical system or environment at a particular time will evolve over one or more subsequent time steps. That is, the input image may depict a scene comprising a physical environment and the corresponding video generated from the input image may comprise video frames that predict the physical environment at one or more time steps after the particular time. For example, the input image may comprise one or more objects and each video frame may be a prediction of the location and/or configuration of each of the objects in the physical environment at the corresponding time step.

The video may be used as an input to a control task. For example, the video may be used for model predictive control of an agent, such as a robot or mechanical agent. In such cases, the noisy trajectory may be conditioned on one or more actions that can be performed by the robot or mechanical agent, such that the video is a prediction of the physical environment that would be obtained if the robot or mechanical agent were to perform the one or more actions. Thus, the video may be used by a control system to control a mechanical agent such as a robot to perform a particular task by processing the predicted video using the control system to generate a control signal to control the mechanical agent, in accordance with the video, to perform the task. The input image can be captured by one or more sensors in the physical environment, e.g. one or more sensors of the robot or mechanical agent. The input image may depict a part of the robot or mechanical, such as a gripper hand or another device for manipulating objects. As another example, the video frames, or an embedding of the video frames, can be provided as an additional input to a policy neural network that is used to select actions to be performed by a robot or other agent interacting with a physical environment to perform a particular task, such as navigation within the physical environment or identification or manipulation of one or more objects in the physical environment.

In some implementations, the system and method described herein can be used for human pose estimation or prediction. For example, the input image may depict a person having a pose at a particular time and each of video frames can then be a prediction of a pose that the person will adopt at a corresponding time after the particular time.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions. With reference to particular neural networks, a neural network may be configured to perform a particular action by being trained to perform that particular action.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, e.g., one or more modules of computer program instructions encoded on a tangible non transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub programs, or portions of code. A computer program can be deployed to be executed on one computer or on multiple computers that are located at one site or distributed across multiple sites and interconnected by a data communication network.

**In** this specification, the term "database" is used broadly to refer to any collection of data: the data does not need to be structured in any particular way, or structured at all, and it can be stored on storage devices in one or more locations. Thus, for example, the index database can include multiple collections of data, each of which may be organized and accessed differently.

Similarly, in this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer readable media suitable for storing computer program instructions and data include all forms of non volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, e.g., inference, workloads.

Machine learning models can be implemented and deployed using a machine learning framework, .e.g., a TensorFlow framework or a Jax framework.

Embodiments of the subject matter described in this specification can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

## Claims

1. A method performed by one or more computers and for generating a video (102) that animates an input image (104) across a plurality of time steps, the method comprising:
receiving (202) the input image;
processing a first input derived from the input image using a first generative neural network (110) to generate (208) respective point trajectories (106) for each of one or more points in the input image, wherein each point trajectory comprises, for each of the plurality of time steps in the video, (i) a predicted spatial position of the corresponding point in a video frame at the time step in the video, and (ii) an occlusion score that estimates a likelihood that the corresponding point will be occluded in the video frame at the time step; and
generating (306) each of the video frames in the video that animates the input image using a second generative neural network (120) and based on the input image and the one or more point trajectories.

2. The method of claim 1, further comprising:
processing the input image (104) using an image encoder neural network to generate an encoded representation of the input image, wherein the first input comprises the encoded representation of the input image.

3. The method of any preceding claim, wherein the first generative neural network (110) is a diffusion neural network that generates each point trajectory from a corresponding noisy trajectory conditioned on the first input.

4. The method of claim 3, wherein the first generative neural network (110) has been trained on a training data set that comprises (i) a plurality of video sequences and (ii) for each of the video sequences, a respective point trajectory for each of one or more points in a first frame within the video sequence, and
optionally wherein:
the first generative neural network (110) comprises a two-dimensional convolutional neural network, such as a U-Net, and optionally, the two-dimensional convolutional neural network comprises one or more self-attention layers.

5. The method of any one of claims 3-4, wherein each corresponding noisy trajectory comprises a concatenation of noisy coordinates and a noisy occlusion estimate, wherein optionally, the noisy coordinates are augmented with a positional encoding.

6. The method of claim 4, wherein, for at least a subset of the video sequences, one or more of the point trajectories (106) have been generated by processing an input comprising the corresponding point in the first frame using a point tracking neural network.

7. The method of claim 6, wherein the point tracking neural network is configured to, for each video sequence in the subset and for a corresponding point in the first frame in the video:
generate a query feature for the corresponding point;
generate, using the query feature, a cost volume that comprises a respective cost map for each of a plurality of frames in the video sequence, each cost map having a respective cost value for each spatial location in the respective frame, each cost value being computed using a dot product between the query feature and a feature for the spatial location in the frame; and
generate, for each of the plurality of frames, an initial position of the corresponding point in the frame and an initial occlusion estimate for the corresponding point in the frame using the cost map for the frame.

8. The method of claim 7, wherein the point tracking neural network is further configured to:
generate the point trajectory for the corresponding point by refining the initial positions, refining the initial occlusion estimates for the plurality of frames, or both, using an initial point trajectory that comprises the initial positions and the initial occlusion estimates for the plurality of frames; and
preferably, wherein:
refining the initial positions and the initial occlusion estimates for the plurality of frames using an initial point trajectory that comprises the initial positions and the initial occlusion estimates for the plurality of frames comprises, at each of one or more refining iterations:
generating, from a current point trajectory as of the refining iterations, a set of local score maps that, for each frame, capture similarity between features in a neighborhood of the predicted position in the current point trajectory in the frame and the query feature; and
processing an input comprising the set of local score maps using a refinement neural network to generate an update to the current point trajectory, and
more preferably, wherein:
(i) the refinement neural network is a depthwise mixing neural network that propagates information across frames using depthwise convolutional layers; and/or
(ii) the input comprises the set of local score maps, the query feature, and the current point trajectory.

9. The method of any preceding claim, wherein the second generative neural network (120) is a diffusion neural network that generates each frame from a corresponding noisy frame conditioned on a conditioning input derived from the input image (104) and the one or more point trajectories (106); and
optionally, wherein:
for each video frame, the conditioning input comprises a warped version of the input image (104) that has been warped according to the one or more point trajectories (106) to represent the image, and preferably:
(i) for each video frame, the conditioning input comprises a warped version of features extracted from the input image (104) that have been warped according to the one or more point trajectories (106);
and/or
(ii) the diffusion neural network generates each frame across a plurality of reverse diffusion iterations and wherein, for at least a subset of the frames, the input at a given reverse diffusion iteration comprises a current version of one or more preceding frames in the video as of the reverse diffusion iteration.

10. The method of any preceding claim, wherein:
(i) the input image (104) depicts a real-world environment at a particular time and each of the video frames is a prediction of the real-world environment at a corresponding time after the particular time, and
optionally, further comprising using a control system to control a robot or mechanical agent to perform a particular task by processing the video using the control system to generate one or more control signals to control the robot or mechanical agent, in accordance with the video, to perform the task; and/or
(ii) the input image (104) depicts a person having a pose at a particular time and each of the video frames is a prediction of a pose that the person will adopt at a corresponding time after the particular time.

11. A system comprising:
one or more computers; and
one or more storage devices communicatively coupled to the one or more computers, wherein the one or more storage devices store instructions that, when executed by the one or more computers, cause the one or more computers to perform operations of the respective method of any one of claims 1-10.

12. One or more non-transitory computer storage media storing instructions that when executed by one or more computers cause the one or more computers to perform operations of the respective method of any one of claims 1-10.

## Patentansprüche

1. Verfahren, das von einem oder mehreren Computern durchgeführt wird und zum Generieren eines Videos (102) dient, das ein Eingabebild (104) über eine Mehrzahl von Zeitschritten animiert, wobei das Verfahren Folgendes umfasst:
Empfangen (202) des Eingabebilds;
Verarbeiten einer ersten Eingabe, die von dem Eingabebild abgeleitet ist, unter Verwendung eines ersten generativen neuronalen Netzwerks (110), um jeweilige Punkttrajektorien (106) für jeden von einem oder mehreren Punkten in dem Eingabebild zu generieren (208), wobei jede Punkttrajektorie für jeden der Mehrzahl von Zeitschritten in dem Video (i) eine vorhergesagte räumliche Position des korrespondierenden Punkts in einem Video-Frame zu dem Zeitschritt in dem Video und (ii) einen Verdeckungs-Score umfasst, der eine Wahrscheinlichkeit schätzt, dass der korrespondierende Punkt in dem Video-Frame zu dem Zeitschritt verdeckt wird; und
Generieren (306) jedes der Video-Frames in dem Video, das das Eingabebild animiert, unter Verwendung eines zweiten generativen neuronalen Netzwerks (120) und basierend auf dem Eingabebild und der einen oder den mehreren Punkttrajektorien.

2. Verfahren nach Anspruch 1, ferner umfassend:
Verarbeiten des Eingabebilds (104) unter Verwendung eines neuronalen Bildcodierer-Netzwerks, um eine codierte Darstellung des Eingabebilds zu generieren, wobei die erste Eingabe die codierte Darstellung des Eingabebilds umfasst.

3. Verfahren nach einem der vorhergehenden Ansprüche, wobei das erste generative neuronale Netzwerk (110) ein neuronales Diffusionsnetzwerk ist, das jede Punkttrajektorie aus einer entsprechenden verrauschten Trajektorie generiert, die auf die erste Eingabe konditioniert ist.

4. Verfahren nach Anspruch 3, wobei das erste generative neuronale Netzwerk (110) auf einem Trainingsdatensatz trainiert worden ist, der (i) eine Mehrzahl von Videosequenzen und (ii) für jede der Videosequenzen eine jeweilige Punkttrajektorie für jeden von einem oder mehreren Punkten in einem ersten Frame innerhalb der Videosequenz umfasst, und
optional wobei:
das erste generative neuronale Netzwerk (110) ein zweidimensionales neuronales Faltungsnetzwerk, wie etwa ein U-Net, umfasst, und optional das zweidimensionale neuronale Faltungsnetzwerk eine oder mehrere Self-Attention-Schichten umfasst.

5. Verfahren nach einem der Ansprüche 3-4, wobei jede entsprechende verrauschte Trajektorie eine Verkettung von verrauschten Koordinaten und einer verrauschten Verdeckungsschätzung umfasst, wobei optional die verrauschten Koordinaten mit einer positionellen Codierung augmentiert sind.

6. Verfahren nach Anspruch 4, wobei für mindestens eine Teilmenge der Videosequenzen eine oder mehrere der Punkttrajektorien (106) durch Verarbeiten einer Eingabe, die den korrespondierenden Punkt im ersten Frame umfasst, unter Verwendung eines neuronalen Punktverfolgungs-Netzwerks generiert worden sind.

7. Verfahren nach Anspruch 6, wobei das neuronale Punktverfolgungs-Netzwerk dazu konfiguriert ist, für jede Videosequenz in der Teilmenge und für einen korrespondierenden Punkt in dem ersten Frame in dem Video:
ein Abfragemerkmal für den korrespondierenden Punkt zu generieren;
unter Verwendung des Abfragemerkmals ein Kostenvolumen zu generieren, das eine jeweilige Kostenkarte für jeden einer Mehrzahl von Frames in der Videosequenz umfasst, wobei jede Kostenkarte einen jeweiligen Kostenwert für jeden räumlichen Ort in dem jeweiligen Frame aufweist, wobei jeder Kostenwert unter Verwendung eines Skalarprodukts zwischen dem Abfragemerkmal und einem Merkmal für den räumlichen Ort in dem Frame berechnet wird; und
für jeden der Mehrzahl von Frames eine Anfangsposition des korrespondierenden Punkts in dem Frame und eine anfängliche Verdeckungsschätzung für den korrespondierenden Punkt in dem Frame unter Verwendung der Kostenkarte für den Frame zu generieren.

8. Verfahren nach Anspruch 7, wobei das neuronale Punktverfolgungs-Netzwerk ferner dazu konfiguriert ist:
die Punkttrajektorie für den korrespondierenden Punkt durch Verfeinern der Anfangspositionen, Verfeinern der anfänglichen Verdeckungsschätzungen für die Mehrzahl von Frames oder beides unter Verwendung einer anfänglichen Punkttrajektorie, die die Anfangspositionen und die anfänglichen Verdeckungsschätzungen für die Mehrzahl von Frames umfasst, zu generieren; und
vorzugsweise wobei:
Verfeinern der Anfangspositionen und der anfänglichen Verdeckungsschätzungen für die Mehrzahl von Frames unter Verwendung einer anfänglichen Punkttrajektorie, die die Anfangspositionen und die anfänglichen Verdeckungsschätzungen für die Mehrzahl von Frames umfasst, bei jeder von einer oder mehreren Verfeinerungsiterationen umfasst:
Generieren, aus einer aktuellen Punkttrajektorie zum Zeitpunkt der Verfeinerungsiterationen, eines Satzes von lokalen Bewertungskarten, die für jeden Frame eine Ähnlichkeit zwischen Merkmalen in einer Nachbarschaft der vorhergesagten Position in der aktuellen Punkttrajektorie in dem Frame und dem Abfragemerkmal erfassen; und
Verarbeiten einer Eingabe, die den Satz von lokalen Bewertungskarten umfasst, unter Verwendung eines neuronalen Verfeinerungs-Netzwerks, um eine Aktualisierung der aktuellen Punkttrajektorie zu generieren, und
besonders bevorzugt, wobei:
(i) das neuronale Verfeinerungs-Netzwerk ein neuronales Depthwise-Mixing-Netzwerk ist, das Informationen über Frames hinweg unter Verwendung von tiefenweisen Faltungsschichten propagiert; und/oder
(ii) die Eingabe den Satz von lokalen Bewertungskarten, das Abfragemerkmal und die aktuelle Punkttrajektorie umfasst.

9. Verfahren nach einem der vorhergehenden Ansprüche, wobei das zweite generative neuronale Netzwerk (120) ein neuronales Diffusionsnetzwerk ist, das jeden Frame aus einem entsprechenden verrauschten Frame generiert, der auf eine Konditionierungseingabe konditioniert ist, die von dem Eingabebild (104) und der einen oder den mehreren Punkttrajektorien (106) abgeleitet ist; und
optional, wobei:
für jeden Video-Frame die Konditionierungseingabe eine verzerrte Version des Eingabebilds (104) umfasst, die gemäß der einen oder den mehreren Punkttrajektorien (106) verzerrt worden ist, um das Bild darzustellen, und vorzugsweise:
(i) für jeden Video-Frame die Konditionierungseingabe eine verzerrte Version von aus dem Eingabebild (104) extrahierten Merkmalen umfasst, die gemäß der einen oder den mehreren Punkttrajektorien (106) verzerrt worden sind; und/oder
(ii) das neuronale Diffusionsnetzwerk jeden Frame über eine Mehrzahl von Rückwärtsdiffusionsiterationen generiert und wobei für mindestens eine Teilmenge der Frames die Eingabe bei einer gegebenen Rückwärtsdiffusionsiteration eine aktuelle Version eines oder mehrerer vorhergehender Frames in dem Video zum Zeitpunkt der Rückwärtsdiffusionsiteration umfasst.

10. Verfahren nach einem der vorhergehenden Ansprüche, wobei:
(i) das Eingabebild (104) eine reale Umgebung zu einer bestimmten Zeit abbildet und jeder der Video-Frames eine Vorhersage der realen Umgebung zu einer entsprechenden Zeit nach der bestimmten Zeit ist, und
optional, ferner umfassend Verwenden eines Steuersystems, um einen Roboter oder mechanischen Agenten zu steuern, um eine bestimmte Aufgabe auszuführen, indem das Video unter Verwendung des Steuersystems verarbeitet wird, um ein oder mehrere Steuersignale zu generieren, um den Roboter oder mechanischen Agenten in Übereinstimmung mit dem Video zu veranlassen, die Aufgabe auszuführen; und/oder
(ii) das Eingabebild (104) eine Person abbildet, die zu einer bestimmten Zeit eine Pose aufweist, und jeder der Video-Frames eine Vorhersage einer Pose ist, die die Person zu einer entsprechenden Zeit nach der bestimmten Zeit einnehmen wird.

11. System, umfassend:
einen oder mehrere Computer; und
eine oder mehrere Speichervorrichtungen, die kommunikativ mit dem einen oder den mehreren Computern gekoppelt sind, wobei die eine oder die mehreren Speichervorrichtungen Anweisungen speichern, die, wenn sie von dem einen oder den mehreren Computern ausgeführt werden, den einen oder die mehreren Computer veranlassen, Operationen des jeweiligen Verfahrens nach einem der Ansprüche 1-10 durchzuführen.

12. Ein oder mehrere nichtflüchtige Computerspeichermedien, die Anweisungen speichern, die, wenn sie von einem oder mehreren Computern ausgeführt werden, den einen oder die mehreren Computer veranlassen, Operationen des jeweiligen Verfahrens nach einem der Ansprüche 1-10 durchzuführen.

## Revendications

1. Procédé réalisé par un ou plusieurs ordinateurs pour générer une vidéo (102) qui anime une image d'entrée (104) sur une pluralité d'étapes temporelles, le procédé comprenant :
la réception (202) de l'image d'entrée ;
le traitement d'une première entrée dérivée de l'image d'entrée à l'aide d'un premier réseau neuronal génératif (110) afin de générer (208) des trajectoires de points respectives (106) pour chacun d'un ou de plusieurs points dans l'image d'entrée, dans lequel chaque trajectoire de point comprend, pour chacune de la pluralité d'étapes temporelles de la vidéo, (i) une position spatiale prédite du point correspondant dans une trame vidéo à l'étape temporelle dans la vidéo, et (ii) un score d'occlusion qui estime une probabilité que le point correspondant soit occulté dans la trame vidéo à l'étape temporelle ; et
la génération (306) de chacune des trames vidéo dans la vidéo qui anime l'image d'entrée à l'aide d'un second réseau neuronal génératif (120) et sur la base de l'image d'entrée et des une ou plusieurs trajectoires de points.

2. Procédé selon la revendication 1, comprenant en outre :
le traitement de l'image d'entrée (104) à l'aide d'un réseau neuronal d'encodeur d'image pour générer une représentation encodée de l'image d'entrée, dans lequel la première entrée comprend la représentation encodée de l'image d'entrée.

3. Procédé selon une quelconque revendication précédente, dans lequel le premier réseau neuronal génératif (110) est un réseau neuronal de diffusion qui génère chaque trajectoire de point à partir d'une trajectoire bruitée correspondante conditionnée par la première entrée.

4. Procédé selon la revendication 3, dans lequel le premier réseau neuronal génératif (110) a été entraîné sur un ensemble de données d'entraînement qui comprend (i) une pluralité de séquences vidéo et (ii) pour chacune des séquences vidéo, une trajectoire de point respective pour chacun d'un ou de plusieurs points dans une première trame de la séquence vidéo, et éventuellement dans lequel :
le premier réseau neuronal génératif (110) comprend un réseau neuronal convolutif bidimensionnel, tel qu'un U-Net, et éventuellement, le réseau neuronal convolutif bidimensionnel comprend une ou plusieurs couches d'auto-attention.

5. Procédé selon l'une quelconque des revendications 3 et 4, dans lequel chaque trajectoire bruitée correspondante comprend une concaténation de coordonnées bruitées et d'une estimation d'occlusion bruitée, dans lequel, éventuellement, les coordonnées bruitées sont augmentées avec un codage positionnel.

6. Procédé selon la revendication 4, dans lequel, pour au moins un sous-ensemble des séquences vidéo, une ou plusieurs des trajectoires de points (106) ont été générées en traitant une entrée comprenant le point correspondant dans la première trame à l'aide d'un réseau neuronal de suivi de points.

7. Procédé selon la revendication 6, dans lequel le réseau neuronal de suivi de points est configuré pour, pour chaque séquence vidéo dans le sous-ensemble et pour un point correspondant dans la première trame de la vidéo :
générer une caractéristique de requête pour le point correspondant ;
générer, à l'aide de la caractéristique de requête, un volume de coût qui comprend une carte de coût respective pour chacune d'une pluralité de trames dans la séquence vidéo, chaque carte de coût ayant une valeur de coût respective pour chaque emplacement spatial dans la trame respective, chaque valeur de coût étant calculée à l'aide d'un produit scalaire entre la caractéristique de requête et une caractéristique pour l'emplacement spatial dans la trame ; et
générer, pour chacune de la pluralité de trames, une position initiale du point correspondant dans la trame et une estimation d'occlusion initiale pour le point correspondant dans la trame à l'aide de la carte de coût pour la trame.

8. Procédé selon la revendication 7, dans lequel le réseau neuronal de suivi de points est en outre configuré pour :
générer la trajectoire de point pour le point correspondant en affinant les positions initiales, en affinant les estimations d'occlusion initiales pour la pluralité de trames, ou les deux, à l'aide d'une trajectoire de point initiale qui comprend les positions initiales et les estimations d'occlusion initiales pour la pluralité de trames ; et
de préférence, dans lequel :
l'affinage des positions initiales et des estimations d'occlusion initiales pour la pluralité de trames à l'aide d'une trajectoire de point initiale qui comprend les positions initiales et les estimations d'occlusion initiales pour la pluralité de trames comprend, à chacune d'une ou de plusieurs itérations d'affinage :
la génération, à partir d'une trajectoire de point actuelle lors des itérations d'affinage, d'un ensemble de cartes de score locales qui, pour chaque trame, capturent la similarité entre les caractéristiques dans un voisinage de la position prédite dans la trajectoire de point actuelle dans la trame et la caractéristique de requête ; et
le traitement d'une entrée comprenant l'ensemble de cartes de score locales à l'aide d'un réseau neuronal de raffinement pour générer une mise à jour de la trajectoire de point actuelle, et de manière davantage préférée, dans lequel :
(i) le réseau neuronal de raffinement est un réseau neuronal de mélange en profondeur qui propage l'information entre les trames à l'aide de couches convolutionnelles en profondeur ; et/ou
(ii) l'entrée comprend l'ensemble de cartes de score locales, la caractéristique de requête et la trajectoire de point actuelle.

9. Procédé selon une quelconque revendication précédente, dans lequel le second réseau neuronal génératif (120) est un réseau neuronal de diffusion qui génère chaque trame à partir d'une trame bruitée correspondante conditionnée par une entrée de conditionnement dérivée de l'image d'entrée (104) et des une ou plusieurs trajectoires de points (106) ; et
éventuellement, dans lequel :
pour chaque trame vidéo, l'entrée de conditionnement comprend une version déformée de l'image d'entrée (104) qui a été déformée selon les une ou plusieurs trajectoires de points (106) pour représenter l'image, et de préférence :
(i) pour chaque trame vidéo, l'entrée de conditionnement comprend une version déformée des caractéristiques extraites de l'image d'entrée (104) qui ont été déformées selon les une ou plusieurs trajectoires de points (106) ; et/ou
(ii) le réseau neuronal de diffusion génère chaque trame à travers une pluralité d'itérations de diffusion inverse et dans lequel, pour au moins un sous-ensemble des trames, l'entrée à une itération de diffusion inverse donnée comprend une version actuelle d'une ou de plusieurs trames précédentes dans la vidéo lors de l'itération de diffusion inverse.

10. Procédé selon une quelconque revendication précédente, dans lequel :
(i) l'image d'entrée (104) représente un environnement réel à un instant particulier et chacune des trames vidéo est une prédiction de l'environnement réel à un instant correspondant après l'instant particulier, et
éventuellement, comprenant en outre l'utilisation d'un système de commande pour commander un robot ou un agent mécanique pour réaliser une tâche particulière en traitant la vidéo à l'aide du système de commande pour générer un ou plusieurs signaux de commande pour commander le robot ou l'agent mécanique, conformément à la vidéo, pour réaliser la tâche ; et/ou
(ii) l'image d'entrée (104) représente une personne ayant une pose à un instant particulier et chacune des trames vidéo est une prédiction d'une pose que la personne adoptera à un instant correspondant après l'instant particulier.

11. Système comprenant :
un ou plusieurs ordinateurs ; et
un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser des opérations du procédé respectif selon l'une quelconque des revendications 1 à 10.

12. Un ou plusieurs supports de stockage informatique non transitoires stockant des instructions qui, lorsqu'elles sont exécutées par un ou plusieurs ordinateurs, amènent les un ou plusieurs ordinateurs à réaliser des opérations du procédé respectif selon l'une quelconque des revendications 1 à 10.
